# NEW EUROPEAN PATENT SPECIFICATION

(11) **EP 2 939 975 B2**
(45) Date of publication and mention of the opposition decision: **04.11.2026**
(45) Mention of the grant of the patent: 14.07.2021
(21) Application number: 15163504.2
(22) Date of filing: 14.04.2015
(51) Int. Cl.: B67D 7/34

(54) **METHOD AND SYSTEM FOR DISPLACING A FLUID FROM A SUPPLY CONTAINER TO A BUFFER TANK**
VERFAHREN UND SYSTEM ZUM VERLAGERN EINES FLUIDS AUS EINEM VORRATSBEHÄLTER IN EINEN PUFFERTANK
PROCÉDÉ ET SYSTÈME PERMETTANT DE DÉPLACER UN FLUIDE DEPUIS UN CONTENEUR D'ALIMENTATION VERS UN RÉSERVOIR TAMPON

(30) Priority: 29.04.2014 NL 2012707
(43) Date of publication of application: 04.11.2015
(73) Proprietor: Christeyns B.V., 2153 PH Nieuw-Vennep (NL)
(72) Inventor: Bostoen, Alain, Joseph, André, 9000 Gent (BE); Warmoeskerken, Marinus, Maria, Cornelis, Gerardus, 2612 HL Delft (NL); Van Haasteren, Cornelis, 2181 WB Hillegom (NL)
(74) Representative: Patentwerk B.V.

(56) References cited:
- WO-A1-2012/031323
- JP-A- H06 313 500
- US-A1- 2006 006 228
- US-A1- 2013 314 206
- US-A1- 2013 314 213
- US-A1- 2013 314 217

## Description

The invention relates to a method for displacing a fluid from a supply container to a buffer tank. The invention also relates to a system for displacing a fluid from a supply container to a buffer tank, particularly by applying the method according to the present invention, and more particularly for use in an industrial laundry.

When smaller storage tanks, also referred to as buffer tanks, are replenished at a location with fluids, such as detergents or liquid bleaching agents, from larger (bulk) supply containers, it is of great importance that the correct fluid goes to the correct buffer tank, on the one hand in order to prevent contamination of the fluid and on the other to prevent hazardous situations as a result of fluids reacting with each other. It is possible here to envisage coupling each (bulk) supply container to an associated buffer tank by means of a unique coupling, so that erroneous coupling of a (bulk) supply container to a buffer tank can be prevented, although this option is relatively laborious and expensive and is therefore generally not recommended from a practical viewpoint, since simplicity and standardization are particular aims in practice. An example of such a system has already been described in WO 2012/031323 A1, in which diverse (bulk) supply containers can be coupled to diverse buffer tanks. In order to prevent hazardous situations as a result of an undesired coupling, use is made of identifiers which are read during coupling of a (bulk) supply container and a buffer tank. Only if a correct coupling is detected will transport of fluid take place.

The identification of diverse identifiers in order to prevent undesired couplings is also described in US 2013/0314206 A1. US 2013/0314206 A1 describes the use of RFID tags for the purpose of identifying fluids to be supplied and associated specific conduits. A similar system is also described in US 2006/0006228 A1, wherein supply containers, conduits and buffer tanks are provided with a tag comprising product-specific information. During coupling of the diverse components it will be possible to read a code, which is compared to a code prestored in a database. If the code corresponds, displacement of fluids will take place.

A further standardization and simplification of the displacement of fluids from a (bulk) supply container to a buffer tank at a location is the application of only a shared (universal) transfer conduit. While the use of a shared transfer conduit to couple a (bulk) supply container to a buffer tank enhances the desired simplicity, it does not however prevent fluid contamination occurring during the transfer process.

The invention has for its object to provide an improved method for displacing a fluid from a (bulk) supply container to a buffer tank in relatively simple manner, wherein the chance of fluid contamination is greatly reduced.

The invention provides for this purpose a method of the type stated in the preamble, comprising the steps of: A) identifying a fluid present in a supply container, B) coupling the supply container to a buffer tank via at least one coupling component, C) identifying the at least one coupling component, D) retrieving historical information relating to the at least one identified coupling component from a database, E) verifying, on the basis of the information collected during step A), step C) and step D), whether the identified fluid may flow through the at least one identified coupling component on the basis of at least one predetermined criterion, which verification takes place by means of a verification device, and F) displacing fluid from the supply container via the at least one coupling component to the buffer tank if the verification as according to step E) is successful, wherein the at least one coupling component is of shared nature and wherein the historical information comprises at least information relating to a fluid last guided through the identified coupling component.

The method according to the invention relates to maintaining control over which fluids may be guided to a buffer tank through the at least one coupling component and under which condition(s). A primary check thus takes place of the prevention of contamination of the fluid in the at least one coupling component, and optionally also of the connection of the supply container to the correct buffer tank. Details of this latter optional addition are further elucidated below.

The method according to the invention preferably takes place at a location (final location) where the fluid will also be used, such as for instance in an industrial textile laundry. The (bulk) supply container is usually positioned temporarily at this location and is generally carried by a vehicle. During the check for preventing contamination of the fluid in the at least one coupling component a verification step takes place by comparing the identity of the fluid to be guided through the at least one coupling component to the identity of the fluid most recently guided through this same coupling component. It is in this way possible to check whether flow of fluid through the at least one coupling component for the purpose of transferring fluid from the supply container to a buffer tank is non-hazardous and approved. The criteria herefor can be of very diverse nature, and greatly depend on the situational conditions. Examples are described in further detail below.

The identification of the fluid during step A) can relate to determining (identifying) the nature of the fluid, particularly the substance of which the fluid consists. This identification can optionally also relate to further details, such as for instance the specific composition, particularly the concentration, of the fluid.

The term fluid must be interpreted broadly in the context of this patent; the fluid can also comprise solid or gaseous constituents and can also be formed by a mixture of several fluids.

The supply container can be of very diverse nature and can for instance be formed by a metal or plastic tank which is placed on a vehicle, although the supply container can for instance also be formed by a jerrycan.

The at least one coupling component applied is of shared nature, this meaning that this coupling component is configured to be (successively) coupled directly or indirectly to a plurality of buffer tanks and a plurality of supply containers, at least within a determined location. This universal feature makes it possible to limit the number of coupling components to a minimum, which is advantageous from an economic and logistical viewpoint. The coupling component is for instance formed by a pump (for forced displacement of fluid from the supply container to a buffer tank), a shut-off valve or a conduit. The conduit can be connected to the supply container here and can also be inserted at least partially, for instance as a lance, into the supply container. A plurality of coupling components are usually applied in practice which are mutually connected in series to enable a connection to be realized between the supply container and a buffer tank.

The identification of each coupling component as according to step C) relates to an identification on individual level and not on the level of type, so that information relating to each individual coupling component can be tracked. The historical information on the use of the coupling component stored during one or more previous sessions makes clear which fluid the coupling component was last in contact with. The historical information can be stored in the database as follows:

| Coupling component ID | Last fluid ID | Date |
|---|---|---|
| Conduit 123 | Perchloroethylene (3%) | 01-01-2014 |

Fluid will generally be guided through the at least one coupling component and thus flow through the at least one coupling component. It is however also possible to envisage the at least one coupling component coming into contact with the fluid in other manner, for instance in that the fluid can also flow around a coupling component instead of flowing therethrough or in addition to flowing therethrough.

Several advantageous embodiments of the method according to the invention will be described hereinbelow by way of illustration.

The identification of the fluid present in the supply container can take place in diverse ways and can for instance take place via an accompanying order receipt. This identification preferably takes place however in at least a partially automated manner by having the identification of the fluid present in the supply container as according to step A) taking place by scanning a tag connected to the supply container, which tag, also referred to here as the supply container tag, comprises information relating to the fluid.

The scanning process can take place in fully automated manner here. From a practical viewpoint and safety viewpoint it is however also recommended to have the scanning process take place in a partially manual manner by making use of a manually controlled scanner, in particular a handheld scanner.

The tag can be of very diverse nature and can for instance be formed by a (text) label, an RFID tag, a barcode and/or a code such as a QR code. The tag can comprise direct information from which the identity of the fluid can be derived. It is however also possible to envisage the tag comprising information, in particular an internet link (URL), which leads to a digital location such as an internet location, via which location the identity of the fluid can be determined. The identity of the fluid will preferably be determined here during or after scanning of the tag by retrieving data which identify the fluid from a digital database on the basis of the scanned information. This database can be installed locally, be installed locally with a third party and/or be installed on a web server (in the cloud). An example of a record (cross-reference) from the database is shown below:

| Tag ID | Fluid ID |
|---|---|
| 12345 | Peracetic acid (5%) |

Identification of the at least one coupling component can also take place in diverse ways. This identification step as according to step C) preferably also takes place by scanning a tag connected to the coupling component, which tag, also referred to here as the coupling component tag, comprises information relating to the coupling component. This scanning process can also take place in fully automated manner. From a practical viewpoint and safety viewpoint it is however also recommended here to have the scanning process take place in partially manual manner by making use of a manually controlled scanner, in particular a handheld scanner.

One of the above stated tags can be applied as tag, using which the coupling component can be directly and/or indirectly identified. The identity of the coupling component will preferably be determined here during or after scanning of the tag by retrieving data which identify the coupling component from a digital database on the basis of the scanned information. This database can be installed locally, be installed locally with a third party and/or be installed on a web server (in the cloud). This database can be integrated with the above stated database for identifying the fluid from the supply container and optionally with the database applied during step D). An example of a record (cross-reference) in this database is shown below:

| Tag ID | Coupling component ID |
|---|---|
| ABCD | Conduit 123 |

As already noted, a plurality of universal (shared) coupling components connected in series can be applied during step B) for the purpose of coupling the supply container and the buffer tank. The coupling components can be similar here, although different types of coupling component are generally (also) applied. It is recommended here that all applied coupling components are identified during step C) and that verification is subsequently made during step D) and step E) for all identified coupling components, on the basis of historical information stored in the database, as to whether the identified fluid may flow through the coupling components, wherein step F) takes place only if the verification step for each identified coupling component is successful. The whole chain of coupling components is in this case checked, and flow through the chain is allowed only if all coupling components are assessed positively during the checking step (verification step) as according to step E).

The at least one criterion applied during step E) can be of diverse nature and depends on the conditions, particularly on the hazardous nature of the fluids as such and the danger to the surrounding area. It is possible to envisage the verification according to the at least predetermined criterion being successful during step E) when the active constituents of the identified fluid correspond to the active constituents of the fluid last used. This would mean that the same fluid may flow through a coupling component several times in succession. The at least one coupling component applied need not then be cleaned, in particular flushed, between the different sessions. This means that an aqueous peracetic acid solution of 5% and an aqueous peracetic acid solution of 10% can be used immediately one after the other, and pass the check during step E).

It is noted that active constituents are understood here to mean reactive constituents in particular. The question of whether a constituent of an identified fluid should be classified as an active constituent depends on the degree of reactivity of the specific constituent relative to constituents stored in a database. If one of the constituents of the fluid last identified and/or last used is found to be reactive relative to one or more of the constituents stored in the database, it is an active constituent.

In an additional criterion it is however also possible to determine that the fluid composition and in particular the concentration of the active constituents in the fluid must also substantially correspond. This would mean that an aqueous peracetic acid solution of 5% and an aqueous peracetic acid solution of 10% cannot be used immediately one after the other, and will thus not pass the check during step E). The coupling component will first have to be cleaned.

It is also possible to envisage the verification according to the at least predetermined criterion being successful during step E) when the identified fluid does not react with the fluid last used. Such a criterion can suffice when only a situation with (fire) hazard in or around the coupling component(s) is undesirable.

It is also possible to envisage the verification according to the at least predetermined criterion being successful during step E) when the identified fluid reacts with the fluid last used and forms reaction products which are deemed acceptable, i.e. noncontaminating and/or non-reactive by-products, such as for instance water or carbon dioxide. In this case the occurrence of a reaction in the coupling component(s) is conditionally allowed.

Step E) will generally take place in automated manner by means of a verification unit, such as a preprogrammed control unit. Such a control unit is configured to communicate in optionally wireless manner with the above stated (handheld) scanners and database(s).

As additional safety provision it is advantageous when the fluid which has to be received in the buffer tank is identified during step A). This makes it possible to perform an additional verification step during step E), wherein verification is made as to whether the fluid from the supply container corresponds to the fluid desired in the buffer tank, wherein step F) takes place only if said additional verification step is successful. Contamination of the system, particularly the coupling component(s) and the buffer tank used, and thereby possibly dangerous or otherwise undesired situations, can in this way be prevented to further extent. It is advantageous here when identification of the buffer tank during step A) takes place by scanning a tag connected to the buffer tank, which tag, also referred to here as the buffer tank tag, comprises information relating to the buffer tank. Examples of applicable tags and the operation thereof have already been described in the foregoing.

If the verification as according to step E) is unsuccessful, the method according to the present invention comprises a further step G), wherein step G) preferably comprises of cleaning the at least one coupling component during step G) by means of a flushing liquid or blowing air through the coupling component, after which the coupling component can be applied once again for the purpose of displacing fluids from the supply container to a desired buffer tank.

The method according to the invention preferably also comprises step H), comprising, during or after performing step G), of storing in the database also used during step D) at least one cross-reference between the identification of the at least one coupling component and the identification of the flushing liquid as fluid which has most recently been guided through the coupling component. During storing of information the previous information relating to the relevant coupling component can optionally be overwritten.

In an alternative embodiment variant the historical information relating to the relevant coupling component is deleted during step H). The absence - after deletion - of historical information relating to the use of the relevant coupling component can then be deemed during step E) as a situation in which the coupling component has been cleaned and can be applied once again. After step H) has been performed, step E) and then step F) can be performed again.

The method preferably also comprises step I), comprising of uncoupling the at least one coupling component from both the supply container and the buffer tank following step F). After use thereof the coupling component can be uncoupled and stored, coupled to another supply container and/or buffer tank and/or be cleaned. It is therefore possible to envisage that, following step I), steps A)-E) and conditionally step F) are performed again for the purpose of displacing a second fluid - differing from the one fluid - from a second supply container to a second buffer tank. It is however usually recommended here that, after uncoupling of the at least one coupling component as according to step I), the at least one uncoupled coupling component is cleaned by means of a flushing fluid during a subsequent step J), and wherein, during or after performing of step J), step K) is performed comprising of storing in the database also used during step D) at least one cross-reference between the identification of the at least one coupling component and the identification of the flushing liquid as fluid which has most recently been guided through the coupling component. In this situation it is also the case that, during storage of information, the previous information relating to the relevant coupling component can optionally be overwritten or that the historical information relating to the relevant coupling component is deleted. As already indicated, the absence of historical information relating to the use of the relevant coupling component during step E) will be deemed a situation in which the coupling component has been cleaned and can be applied once again without danger.

It is possible to envisage step B) being performed before step A). It is also possible to envisage step C) being performed before step B) and/or step A). Step D), which follows step C), can also be performed before step A) and/or step B).

The invention also relates to a system for displacing a fluid from a supply container to a buffer tank, particularly by applying the foregoing method, and more particularly for use in an industrial textile laundry, comprising at least one supply container configured to hold the fluid, which at least one supply container is provided with at least one tag, this tag being provided with information identifying the fluid which can be received in the at least one supply container, at least one buffer tank configured to hold the fluid, at least one coupling component for mutually coupling the at least one supply container to the at least one buffer tank for the purpose of displacing the fluid via the at least one coupling component from the at least one supply container to the at least one coupled buffer tank, which at least one coupling component is provided with at least one tag, this tag being provided with information identifying the coupling component, at least one database comprising at least historical information relating to the at least one coupling component, at least one scanning device configured to scan the at least one supply container tag and the at least one coupling component tag, and at least one verification device connected to the database and the scanning device for the purpose of verifying, on the basis of the identified coupling component, whether the fluid coming from the at least one supply container may flow through the identified coupling component, wherein the at least one coupling component is of shared nature and wherein the historical information comprises at least information relating to a fluid last guided through the at least one identified coupling component. Advantages and embodiment variants have already been described at length in the foregoing.

The scanning device preferably comprises a handheld scanner, whereby manual interaction is required in order to scan all tags.

It is also advantageous for the database to further be provided with a plurality of cross-references, wherein each cross-reference is formed by a link between the supply container tag and the identity of the fluid received in the supply container.

When the system is applied in or close to an industrial textile laundry it is advantageous for at least one buffer tank to be connected to a textile washing device for application in the industrial laundry, such as for instance a so-called tunnel washer. This makes it possible to supply a liquid, such as a detergent or a bleaching agent, to the textile washing device directly from the buffer tank.

The system preferably comprises a plurality of supply containers, wherein at least two supply containers are configured to hold mutually differing fluids. The supply containers will generally not be coupled to (different) coupling components at the same moment, although this is not precluded. It is also possible to envisage only one supply container being positioned at a location in the close vicinity of at least one buffer tank, and optionally a plurality of buffer tanks, at a determined moment such that a mutual physical coupling between the supply container and at least one buffer tank can be realized by means of applying one or more coupling components. The system preferably also comprises at least one flushing device for flushing coupling components with cleaning liquid and/or air or another gas.

The invention will be elucidated on the basis of non-limitative exemplary embodiments shown in the following figures. Herein
- figures 1-3 show schematically a method for displacing a fluid according to the present invention with a new coupling hose;
- figures 4-6 show schematically a method for displacing a fluid according to the present invention with a used coupling hose;
- figures 7-11 show schematically a method for displacing a fluid according to the present invention with a used coupling hose.

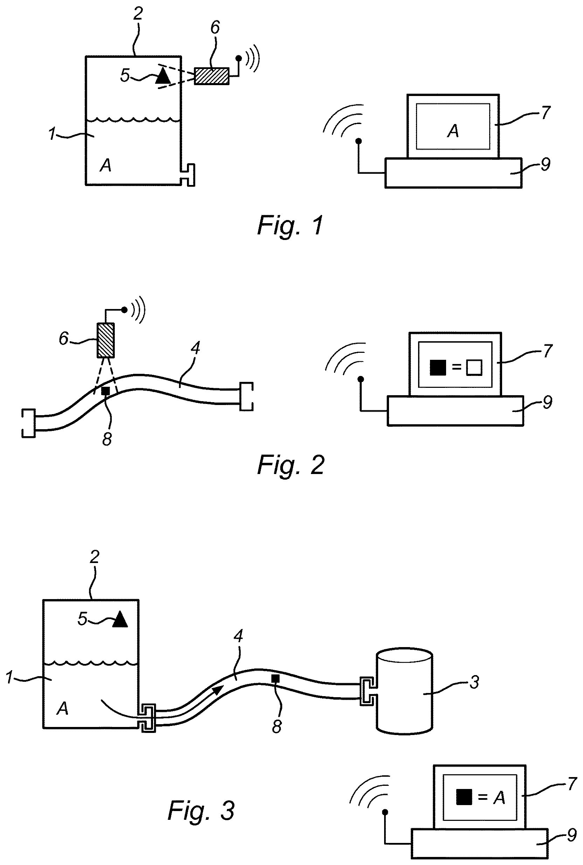

Figures 1, 2 and 3 show schematically a method for displacing a fluid (1) from a supply container (2) to a buffer tank (3) by means of a coupling hose (4), which coupling hose (4) has not been used previously to displace a medium.

Figure 1 shows that the fluid (1) in supply container (2) is identified by scanning a tag (5) on supply container (2) with a scanner (6) and comparing the scanned tag (5) to a database (7).

Figure 2 shows that coupling hose (4) is also identified by scanning a tag (8) on coupling hose (4) with a scanner (6) and comparing the scanned tag (8) to a database (7). The comparison to database (7) shows that coupling hose (4) has not yet been used to displace a fluid (1), and that there are no objections to the use of coupling hose (4) for the fluid (1) in supply container (2).

Coupling hose (4) can be coupled at any moment to supply container (2) and buffer tank (3), although coupling is recommended when the comparison to the database (7) shows that there are no objections.

Figure 3 shows that fluid (1) is displaced from supply container (2) via coupling hose (4) to buffer tank (3) after coupling of coupling hose (4) and the comparison to database (7), this without undesired reactions occurring here.

In the shown method the tags (5, 8) are scanned by means of a wireless scanner (6), after which the scanned information from tags (5, 8) is communicated wirelessly to a computer (9) provided with database (7), although other embodiments can also be envisaged wherein use is for instance made of a plurality of scanners, a plurality of databases or fixed networks.

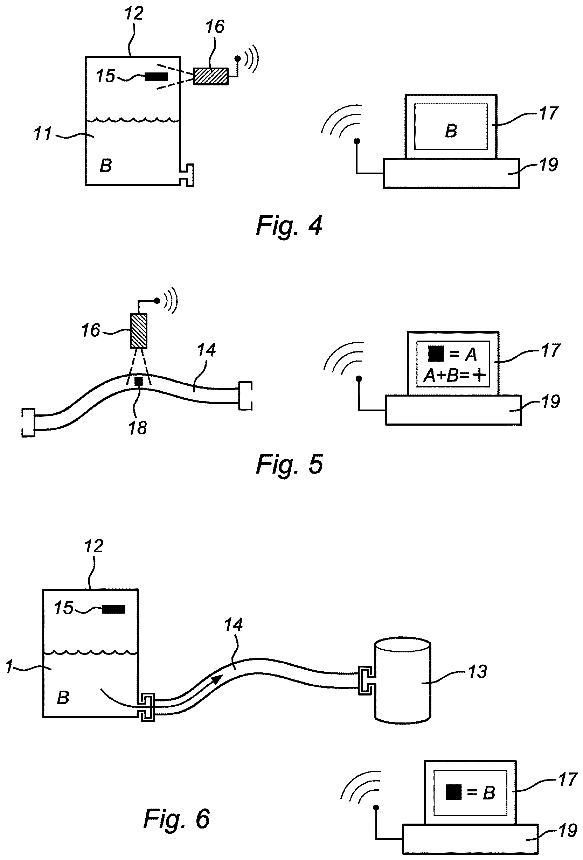

Figures 4-6 show schematically a method for displacing a fluid (11) from a supply container (12) to a buffer tank (13) by means of a coupling hose (14) with a used coupling hose (14), for instance after it has been used as shown in figures 1-3.

Figure 4 shows that the fluid (11) in supply container (12) is identified by scanning a tag (15) on supply container (12) with a scanner (16) and comparing the scanned tag (15) to a database (17).

Figure 5 shows that coupling hose (14) is also identified by scanning a tag (18) on coupling hose (14) with a scanner (16) and comparing the scanned tag (18) to a database (17). The comparison to database (17) shows that coupling hose (14) has been used before to displace a fluid A (1), but that there are no objections to the use of coupling hose (14) for the fluid (11) in supply container (12), illustrated by the plus sign on computer (19).

Coupling hose (14) can be coupled at any moment to supply container (12) and buffer tank (13), although coupling is recommended when the comparison to database (17) shows that there are no objections.

Figure 6 shows that fluid (11) is displaced from supply container (12) via coupling hose (14) to buffer tank (13) after coupling of coupling hose (14) and the comparison to database (17), this without undesired reactions occurring here. Such a scenario can for instance be envisaged when the fluid (1), which has been used previously in coupling hose (14), is similar to the fluid (11) to be displaced now, and the mixing of the two fluids (1, 11) in coupling hose (14) does not produce any undesired by-products.

In the shown method the tags (15, 18) are scanned by means of a wireless scanner (16), after which the scanned information from tags (15, 18) is communicated wirelessly to a computer (19) provided with database (17), although other embodiments can also be envisaged wherein use is for instance made of a plurality of scanners, a plurality of databases or fixed networks.

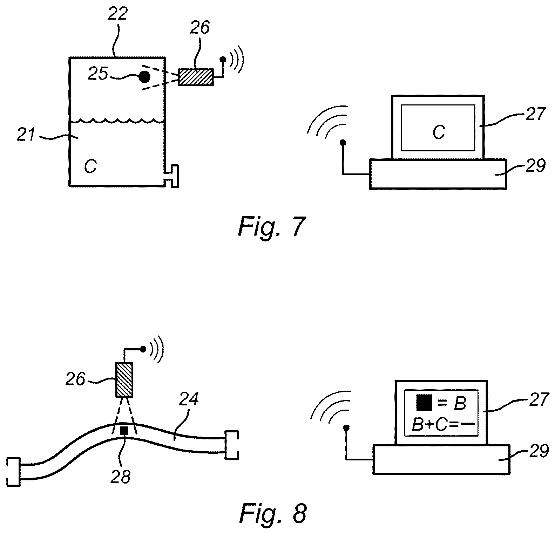

Figures 7-11 once again show schematically a method for displacing a fluid (21) from a supply container (22) to a buffer tank (23) by means of a coupling hose (24) with a used coupling hose (24), for instance after this has been used as shown in figures 1-3 or as shown in figures 4-6. The difference from the method as shown in figures 4-6 is that the previously used fluid (1, 11) may not be mixed with another fluid (21).

Figure 7 shows that the fluid (21) in supply container (22) is identified by scanning a tag (25) on supply container (22) with a scanner (26) and comparing the scanned tag (25) to a database (27).

Figure 8 shows that coupling hose (24) is also identified by scanning a tag (28) on coupling hose (24) with a scanner (26) and comparing the scanned tag (28) to a database (27). The comparison to database (27) shows that coupling hose (24) has been used previously to displace a fluid B (11), and that there are objections to the use of coupling hose (24) for the fluid (21) in supply container (22), illustrated by the minus sign on computer (29). Such a scenario is for instance possible when coupling hose (24) has to be used to transport an alkali while this coupling hose (24) has been used previously to transport an acid. It is also possible that harmful by-products, such as mustard gas, would result in the case the previously transported fluid (1, 11) and the fluid (21) to be transported now were mixed.

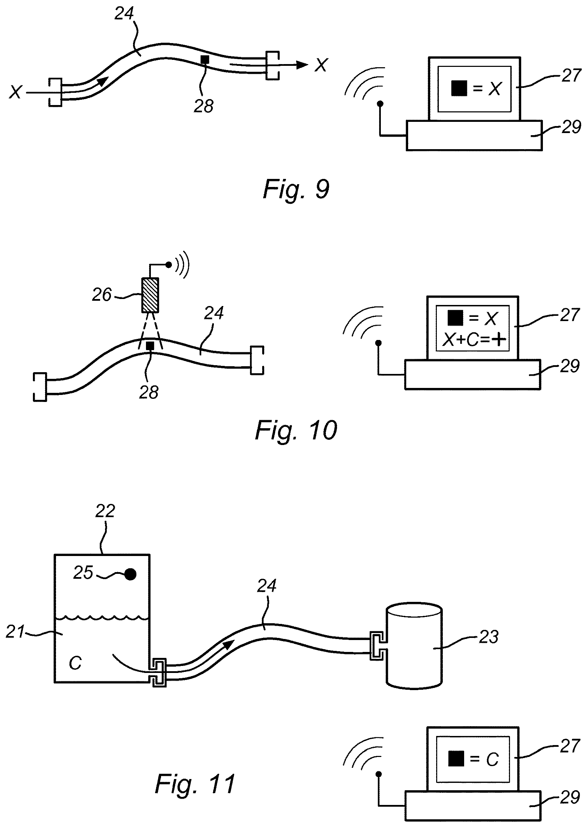

Because coupling hose (24) is not suitable for coupling, it is flushed as shown in figure 9 with a flushing liquid (X). Then entered in database (27) is that coupling hose (24) was last used for the flushing liquid (X).

Figure 10 shows that coupling hose (24) is identified once again by scanning the tag (28) on coupling hose (24) with scanner (26) and comparing the scanned tag (28) to database (27). The comparison to database (27) now shows that coupling hose (24) has been previously used for flushing liquid (X), but that there are no objections to the use of coupling hose (24) for the fluid (21) in supply container (22), illustrated by the plus sign on computer (29).

Coupling hose (24) can be coupled at any moment to supply container (22) and buffer tank (23), although coupling is recommended when the comparison to database (27) shows that there are no objections.

Figure 11 shows that fluid (21) is displaced from supply container (22) via coupling hose (24) to buffer tank (23) after coupling of coupling hose (24) and the comparison to database (27), this without undesired reactions occurring here.

In the shown method the tags (25, 28) are scanned by means of a wireless scanner (26), after which the scanned information from tags (25, 28) is communicated wirelessly to a computer (29) provided with database (27), although other embodiments can also be envisaged wherein use is for instance made of a plurality of scanners, a plurality of databases or fixed networks.

## Claims

1. Method for displacing a fluid (1, 11, 21) from a supply container (2, 12, 22) to a buffer tank (3, 13, 23), comprising the steps of:
A) identifying the fluid (1, 11, 21) present in the supply container (2, 12, 22);
B) coupling the supply container (2, 12, 22) to the buffer tank (3, 13, 23) via at least one coupling component (4, 14, 24);
C) identifying the at least one coupling component (4, 14, 24);
D) retrieving historical information relating to the at least one identified coupling component (4, 14, 24) from a database (7, 17, 27);
E) verifying, on the basis of the information collected during step A), step C) and step D), whether the identified fluid (1, 11, 21) may flow through the at least one identified coupling component (4, 14, 24) on the basis of at least one predetermined criterion, which verification takes place by means of a verification device (9, 19, 29); and
F) displacing fluid (1, 11, 21) from the supply container (2, 12, 22) via the at least one coupling component (4, 14, 24) to the buffer tank (3, 13, 23) if the verification as according to step E) is successful;
**characterized in that** the at least one coupling component (4, 14, 24) is of shared nature wherein said coupling component being configured to be coupled directly or indirectly to a plurality of buffer tanks and a plurality of supply containers and **in that** the historical information comprises at least information relating to a fluid (1, 11, 21) last guided through the at least one identified coupling component (4, 14, 24).

2. Method as claimed in claim 1, wherein the identification of the fluid (1, 11, 21) present in the supply container (2, 12, 22) as according to step A) takes place by scanning a tag (5, 15, 25) connected to the supply container (2, 12, 22), which tag (5, 15, 25) comprises information relating to the fluid (1, 11, 21), and/or the identification of the at least one coupling component (4, 14, 24) as according to step C) takes place by scanning a tag (8, 18, 28) connected to the at least one coupling component (4, 14, 24), which tag (8, 18, 28) comprises information relating to the at least one coupling component (4, 14, 24).

3. Method as claimed in claim 2, wherein during or after scanning of respectively the supply container tag (5, 15, 25) and/or the coupling component tag (8, 18, 28) the identity of the fluid (1, 11, 21) is determined by retrieving data which identify the fluid (1, 11, 21) from the database (7, 17, 27) on the basis of the scanned information and/or the identity of the at least one coupling component (4, 14, 24) is determined by retrieving data which identify the at least one coupling component (4, 14, 24) from the database (7, 17, 27) on the basis of the scanned information.

4. Method as claimed in any of the foregoing claims, wherein a plurality of coupling components (4, 14, 24) connected in series are applied during step B) in order to couple the supply container (2, 12, 22) and the buffer tank (3, 13, 23).

5. Method as claimed in claim 4, wherein all applied coupling components (4, 14, 24) are identified during step C) and verification is subsequently made during step D) and step E) for all identified coupling components (4, 14, 24), on the basis of historical information stored in the database (7, 17, 27), as to whether the identified fluid (1, 11, 21) may flow through the coupling components (4, 14, 24), wherein step F) takes place only if the verification step for each identified coupling component (4, 14, 24) is successful.

6. Method as claimed in any of the foregoing claims, wherein in the database (7, 17, 27) consulted during step D) is stored at least one cross-reference between the identification of the at least one coupling component (4, 14, 24) and the identification of the fluid (1, 11, 21) which has most recently been guided through the coupling component (4, 14, 24).

7. Method as claimed in any of the foregoing claims, wherein the verification according to the at least predetermined criterion is successful during step E) when:
- the active constituents of the identified fluid (1, 11, 21) correspond to the active constituents of the fluid (1, 11, 21) last used; or
- the identified fluid (1, 11, 21) does not react with the fluid (1, 11, 21) last used; or
- the identified fluid (1, 11, 21) reacts with the fluid (1, 11, 21) last used and forms reaction products, in particular water, which are deemed acceptable.

8. Method as claimed in any of the foregoing claims, wherein the fluid (1, 11, 21) which has to be received in the buffer tank (3, 13, 23) is identified during step A).

9. Method as claimed in claim 8, wherein during the verification as according to step E) an additional verification is made as to whether the fluid (1, 11, 21) from the supply container (2, 12, 22) corresponds to the fluid (1, 11, 21) desired in the buffer tank (3, 13, 23), wherein step F) takes place only if said additional verification step is successful.

10. Method as claimed in any of the foregoing claims, wherein if the verification as according to step E) is unsuccessful the method also comprises step G), comprising of cleaning the at least one coupling component (4, 14, 24) by means of a flushing liquid (X).

11. Method as claimed in claim 10, wherein the method also comprises step H), comprising, during or after performing step G), of storing in the database (7, 17, 27) also used during step D) at least one cross-reference between the identification of the at least one coupling component (4, 14, 24) and the identification of the flushing liquid (X) as fluid (1, 11, 21) which has most recently been guided through the coupling component (4, 14, 24).

12. Method as claimed in any of the foregoing claims, wherein the method also comprises step I), comprising of uncoupling the at least one coupling component (4, 14, 24) from both the supply container (2, 12, 22) and the buffer tank (3, 13, 23) following step F).

13. Method as claimed in claim 12, wherein following step I), steps A)-E) and conditionally step F) are performed again for the purpose of displacing a second fluid (1, 11, 21) differing from the one fluid (1, 11, 21) from a second supply container (2, 12, 22) to a second buffer tank (3, 13, 23).

14. Method as claimed in claim 13, wherein after uncoupling of the at least one coupling component (4, 14, 24) as according to step I) the at least one uncoupled coupling component (4, 14, 24) is cleaned by means of a flushing fluid (X) during a subsequent step J), and wherein, during or after performing of step J), step K) is performed comprising of storing in the database (7, 17, 27) also used during step D) at least one cross-reference between the identification of the at least one coupling component (4, 14, 24) and the identification of the flushing liquid (X) as fluid (1, 11, 21) which has most recently been guided through the coupling component (4, 14, 24).

15. System for displacing a fluid (1, 11, 21) from a supply container (2, 12, 22) to a buffer tank (3, 13, 23), particularly by applying the method as claimed in any of the foregoing claims, and more particularly for use in an industrial textile laundry, comprising:
- at least one supply container (2, 12, 22) configured to hold the fluid (1, 11, 21), which at least one supply container (2, 12, 22) is provided with at least one tag (5, 15, 25), this tag (5, 15, 25) being provided with information identifying the fluid (1, 11, 21) which can be received in the at least one supply container (2, 12, 22);
- at least one buffer tank (3, 13, 23) configured to hold the fluid (1, 11, 21);
- at least one coupling component (4, 14, 24) for mutually coupling the at least one supply container (2, 12, 22) to the at least one buffer tank (3, 13, 23) for the purpose of displacing the fluid (1, 11, 21) via the at least one coupling component (4, 14, 24) from the at least one supply container (2, 12, 22) to the at least one coupled buffer tank (3, 13, 23), which at least one coupling component (4, 14, 24) is provided with at least one tag (8, 18, 28), this tag (8, 18, 28) being provided with information identifying the at least one coupling component (4, 14, 24);
- at least one database (7, 17, 27) comprising at least historical information relating to the at least one coupling component (4, 14, 24);
- at least one scanning device (6, 16, 26) configured to scan the at least one supply container tag (5, 15, 25) and the at least one coupling component tag (8, 18, 28); and
- at least one verification device (9, 19, 29) connected to the database (7, 17, 27) and the scanning device (6, 16, 26) for the purpose of verifying, on the basis of the identified coupling component (4, 14, 24), whether fluid (1, 11, 21) coming from the at least one supply container (2, 12, 22) may flow through the identified coupling component (4, 14, 24),
**characterized in that** the at least one coupling component (4, 14, 24) is of shared nature wherein said coupling component is configured to be coupled directly or indirectly to a plurality of buffer tanks and a plurality of supply containers and **in that** the historical information comprises at least information relating to a fluid (1, 11, 21) last guided through the at least one identified coupling component (4, 14, 24).

16. System as claimed in claim 15, wherein at least one coupling component is formed by a conduit or a pump.

17. System as claimed in claim 15 or 16, wherein the supply container (2, 12, 22) is coupled via a plurality of serially connected coupling components (4, 14, 24) to a buffer tank (3, 13, 23).

18. System as claimed in any of the claims 15-17, wherein at least one buffer tank (3, 13, 23) is connected to a textile washing device for application in industrial laundry.

19. System as claimed in any of the claims 15-18, wherein the system comprises at least one flushing device for flushing coupling components (4, 14, 24) with cleaning liquid (X).

## Patentansprüche

1. Verfahren zum Verlagern eines Fluids (1, 11, 21) aus einem Vorratsbehälter (2, 12, 22) in einen Puffertank (3, 13, 23), umfassend die Schritte:
A) Identifizieren des Fluids (1, 11, 21), das in dem Vorratsbehälter (2, 12, 22) vorhanden ist;
B) Koppeln des Vorratsbehälters (2, 12, 22) an den Puffertank (3, 13, 23) über mindestens eine Kopplungskomponente (4, 14, 24);
C) Identifizieren der mindestens einen Kopplungskomponente (4, 14, 24);
D) Abrufen von Historieninformationen, welche die mindestens eine identifizierte Kopplungskomponente (4, 14, 24) betreffen, von einer Datenbank (7, 17, 27);
E) Verifizieren basierend auf den Informationen, die während des Schrittes A), des Schrittes C) und des Schrittes D) gesammelt wurden, ob das identifizierte Fluid (1, 11, 21) durch die mindestens eine identifizierte Kopplungskomponente (4, 14, 24) fließen darf, basierend auf mindestens einem vorbestimmten Kriterium, wobei die Verifizierung mittels einer Verifizierungsvorrichtung (9, 19, 29) stattfindet; und
F) Verlagern von Fluid (1, 11, 21) aus dem Vorratsbehälter (2, 12, 22) über die mindestens eine Kopplungskomponente (4, 14, 24) in den Puffertank (3, 13, 23), falls die Verifizierung gemäß Schritt E) erfolgreich ist;
**dadurch gekennzeichnet, dass** die mindestens eine Kopplungskomponente (4, 14, 24) von gemeinsam genutzter Art ist, wobei die Kopplungskomponente ausgestaltet ist, um direkt oder indirekt an eine Vielzahl von Puffertanks und eine Vielzahl von Vorratsbehältern gekoppelt zu werden, und dadurch, dass die Historieninformationen mindestens Informationen umfassen, die ein Fluid (1, 11, 21) betreffen, das zuletzt durch die mindestens eine identifizierte Kopplungskomponente (4, 14, 24) geführt worden ist.

2. Verfahren nach Anspruch 1, wobei die Identifizierung des Fluids (1, 11, 21), das in dem Vorratsbehälter (2, 12, 22) vorhanden ist, gemäß Schritt A) stattfindet, indem ein Tag (5, 15, 25) gescannt wird, das mit dem Vorratsbehälter (2, 12, 22) verbunden ist, wobei das Tag (5, 15, 25) Informationen umfasst, die das Fluid (1, 11, 21) betreffen, und/oder die Identifizierung der mindestens einen Kopplungskomponente (4, 14, 24) gemäß Schritt C) stattfindet, indem ein Tag (8, 18, 28) gescannt wird, das mit der mindestens einen Kopplungskomponente (4, 14, 24) verbunden ist, wobei das Tag (8, 18, 28) Informationen umfasst, welche die mindestens eine Kopplungskomponente (4, 14, 24) betreffen.

3. Verfahren nach Anspruch 2, wobei während oder nach dem Scannen von jeweils dem Vorratsbehälter-Tag (5, 15, 25) und/oder dem Kopplungskomponente-Tag (8, 18, 28) die Identität des Fluids (1, 11, 21) bestimmt wird, indem Daten, welche das Fluid (1, 11, 21) identifizieren, aus der Datenbank (7, 17, 27) basierend auf den gescannten Informationen abgerufen werden und/oder die Identität der mindestens einen Kopplungskomponente (4, 14, 24) durch Abrufen von Daten, welche die mindestens eine Kopplungskomponente (4, 14, 24) identifizieren, aus der Datenbank (7, 17, 27) basierend auf den gescannten Informationen bestimmt wird.

4. Verfahren nach einem der vorhergehenden Ansprüche, wobei eine Vielzahl von Kopplungskomponenten (4, 14, 24), die in Reihe verbunden sind, während des Schrittes B) angewendet wird, um den Vorratsbehälter (2, 12, 22) und den Puffertank (3, 13, 23) zu koppeln.

5. Verfahren nach Anspruch 4, wobei alle angewendeten Kopplungskomponenten (4, 14, 24) während des Schrittes C) identifiziert werden und die Verifizierung nachfolgend während des Schrittes D) und des Schrittes E) für alle identifizierten Kopplungskomponenten (4, 14, 24) basierend auf Historieninformationen, die in der Datenbank (7, 17, 27) gespeichert sind, in Bezug darauf erfolgt, ob das identifizierte Fluid (1, 11, 21) durch die Kopplungskomponenten (4, 14, 24) fließen darf, wobei Schritt F) nur stattfindet, wenn der Verifizierungsschritt für jede identifizierte Kopplungskomponente (4, 14, 24) erfolgreich ist.

6. Verfahren nach einem der vorhergehenden Ansprüche, wobei in der während des Schrittes D) konsultierten Datenbank (7, 17, 27) mindestens eine Kreuzreferenz zwischen der Identifizierung der mindestens einen Kopplungskomponente (4, 14, 24) und der Identifizierung des Fluids (1, 11, 21) gespeichert ist, welches in jüngster Zeit durch die Kopplungskomponente (4, 14, 24) geführt worden ist.

7. Verfahren nach einem der vorhergehenden Ansprüche, wobei die Verifizierung gemäß dem mindestens vorbestimmten Kriterium während des Schrittes E) erfolgreich ist, wenn:
- die aktiven Bestandteile des identifizierten Fluids (1, 11, 21) den aktiven Bestandteilen des zuletzt verwendeten Fluids (1, 11, 21) entsprechen; oder
- das identifizierte Fluid (1, 11, 21) mit dem zuletzt verwendeten Fluid (1, 11, 21) nicht reagiert; oder
- das identifizierte Fluid (1, 11, 21) mit dem zuletzt verwendeten Fluid (1, 11, 21) reagiert und Reaktionsprodukte, insbesondere Wasser, bildet, die als akzeptabel angesehen werden.

8. Verfahren nach einem der vorhergehenden Ansprüche, wobei das Fluid (1, 11, 21), das in dem Puffertank (3, 13, 23) angenommen werden soll, während des Schrittes A) identifiziert wird.

9. Verfahren nach Anspruch 8, wobei während der Verifizierung gemäß dem Schritt E) eine zusätzliche Verifizierung erfolgt, ob das Fluid (1, 11, 21) aus dem Vorratsbehälter (2, 12, 22) dem Fluid (1, 11, 21) entspricht, das in dem Puffertank (3, 13, 23) gewünscht wird, wobei Schritt F) nur stattfindet, falls der zusätzliche Verifizierungsschritt erfolgreich ist.

10. Verfahren nach einem der vorhergehenden Ansprüche, wobei das Verfahren, falls die Verifizierung gemäß Schritt E) erfolglos ist, auch Schritt G) umfasst, der das Reinigen der mindestens einen Kopplungskomponente (4, 14, 24) mithilfe einer Spülflüssigkeit (X) umfasst.

11. Verfahren nach Anspruch 10, wobei das Verfahren auch Schritt H) umfasst, der während oder nach Durchführung des Schrittes G) das Speichern von mindestens eine Kreuzreferenz zwischen der Identifizierung der mindestens einen Kopplungskomponente (4, 14, 24) und der Identifizierung der Spülflüssigkeit (X) als Fluid (1, 11, 21), das in jüngster Zeit durch die Kopplungskomponente (4, 14, 24) geführt worden ist, in der Datenbank (7, 17, 27) umfasst, die auch während des Schrittes D) verwendet worden ist.

12. Verfahren nach einem der vorhergehenden Ansprüche, wobei das Verfahren auch Schritt I) umfasst, der das Entkoppeln der mindestens einen Kopplungskomponente (4, 14, 24) von sowohl dem Vorratsbehälter (2, 12, 22) als auch dem Puffertank (3, 13, 23) nach Schritt F) umfasst.

13. Verfahren nach Anspruch 12, wobei nach Schritt I) die Schritte A) bis E) und gegebenenfalls Schritt F) erneut durchgeführt werden, um ein zweites Fluid (1, 11, 21), das sich von dem einen Fluid (1, 11, 21) unterscheidet, von einem zweiten Vorratsbehälter (2, 12, 22) zu einem zweiten Puffertank (3, 13, 23) zu verlagern.

14. Verfahren nach Anspruch 13, wobei nach dem Entkoppeln der mindestens einen Kopplungskomponente (4, 14, 24), wie gemäß Schritt I), die mindestens eine entkoppelte Kopplungskomponente (4, 14, 24) mithilfe eines Spülfluids (X) während des nachfolgenden Schrittes J) gereinigt wird, und wobei während oder nach dem Durchführen von Schritt J) Schritt K) durchgeführt wird, der Speichern von mindestens einer Kreuzreferenz zwischen der Identifizierung der mindestens einen Kopplungskomponente (4, 14, 24) und der Identifizierung der Spülflüssigkeit (X) als Fluid (1, 11, 21), das in jüngster Zeit durch die Kopplungskomponente (4, 14, 24) geführt worden ist, in der Datenbank (7, 17, 27) umfasst, die auch während des Schrittes D) verwendet worden ist.

15. System zum Verlagern eines Fluids (1, 11, 21) von einem Vorratsbehälter (2, 12, 22) zu einem Puffertank (3, 13, 23), insbesondere durch Anwenden des Verfahrens nach einem der vorhergehenden Ansprüche und insbesondere zur Verwendung in einer industriellen Textilienwäscherei, umfassend:
- mindestens einen Vorratsbehälter (2, 12, 22), der ausgestaltet ist, um das Fluid (1, 11, 21) zu halten, wobei dieser mindestens eine Vorratsbehälter (2, 12, 22) mit mindestens einem Tag (5, 15, 25) ausgestattet ist, dieses Tag (5, 15, 25) mit Informationen ausgestattet ist, die das Fluid (1, 11, 21) identifizieren, welches in dem mindestens einen Vorratsbehälter (2, 12, 22) angenommen werden kann;
- mindestens einen Puffertank (3, 13, 23), der ausgestaltet ist, um das Fluid (1, 11, 21) zu halten;
- mindestens eine Kopplungskomponente (4, 14, 24) zum wechselseitigen Koppeln des mindestens einen Vorratsbehälters (2, 12, 22) mit dem mindestens einen Puffertank (3, 13, 23) zum Zweck des Verlagerns des Fluids (1, 11, 21) über die mindestens eine Kopplungskomponente (4, 14, 24) von dem mindestens einen Vorratsbehälter (2, 12, 22) zu dem mindestens einen gekoppelten Puffertank (3, 13, 23), wobei diese mindestens eine Kopplungskomponente (4, 14, 24) mit mindestens einem Tag (8, 18, 28) ausgestattet ist, dieses Tag (8, 18, 28) mit Informationen ausgestattet ist, welche die mindestens eine Kopplungskomponente (4, 14, 24) identifizieren;
- mindestens eine Datenbank (7, 17, 27), die mindestens Historieninformationen umfasst, welche die mindestens eine Kopplungskomponente (4, 14, 24) betreffen;
- mindestens eine Scanvorrichtung (6, 16, 26), die ausgestaltet ist, um das mindestens eine Vorratsbehälter-Tag (5, 15, 25) und das mindestens eine Kopplungskomponenten-Tag (8, 18, 28) zu scannen; und
- mindestens eine Verifizierungsvorrichtung (9, 19, 29), die mit der Datenbank (7, 17, 27) und der Scanvorrichtung (6, 16, 26) verbunden ist, um basierend auf der identifizierten Kopplungskomponente (4, 14, 24) zu verifizieren, ob Fluid (1, 11, 21), das aus dem mindestens einen Vorratsbehälter (2, 12, 22) kommt, durch die identifizierte Kopplungskomponente (4, 14, 24) fließen darf,
**dadurch gekennzeichnet, dass** die mindestens eine Kopplungskomponente (4, 14, 24) von gemeinsam genutzter Art ist, wobei die Kopplungskomponente ausgestaltet ist, um direkt oder indirekt an eine Vielzahl von Puffertanks und eine Vielzahl von Vorratsbehältern gekoppelt zu werden, und dadurch, dass die Historieninformationen mindestens Informationen umfassen, die ein Fluid (1, 11, 21) betreffen, das zuletzt durch die mindestens eine identifizierte Kopplungskomponente (4, 14, 24) geführt worden ist.

16. System nach Ansprüche 15, wobei mindestens eine Kopplungskomponente durch eine Rohrleitung oder eine Pumpe gebildet wird.

17. System nach Ansprüche 15 oder 16, wobei der Vorratsbehälter (2, 12, 22) über eine Vielzahl von seriell verbundenen Kopplungskomponenten (4, 14, 24) an einen Puffertank (3, 13, 23) gekoppelt ist.

18. System nach einem der Ansprüche 15 bis 17, wobei mindestens ein Puffertank (3, 13, 23) mit einer Textilienwaschvorrichtung zur Anwendung in einer industriellen Wäscherei verbunden ist.

19. System nach einem der Ansprüche 15 bis 18, wobei das System mindestens eine Spülvorrichtung zum Spülen von Kopplungskomponenten (4, 14, 24) mit Reinigungsflüssigkeit (X) umfasst.

## Revendications

1. Procédé de déplacement d'un fluide (1, 11, 21) depuis un récipient d'alimentation (2, 12, 22) jusqu'à un réservoir tampon (3, 13, 23), comprenant les étapes suivantes :
A) identification du fluide (1, 11, 21) présent dans le récipient d'alimentation (2, 12, 22) ;
B) couplage du récipient d'alimentation (2, 12, 22) au réservoir tampon (3, 13, 23) par le biais d'au moins un composant de couplage (4, 14, 24) ;
C) identification de l'au moins un composant de couplage (4, 14, 24) ;
D) récupération d'informations historiques relatives à l'au moins un composant de couplage identifié (4, 14, 24) à partir d'une base de données (7, 17, 27) ;
E) vérification, sur la base des informations collectées pendant l'étape A), l'étape C) et l'étape D), que le fluide identifié (1, 11, 21) peut s'écouler ou non à travers l'au moins un composant de couplage identifié (4, 14, 24) sur la base d'au moins un critère prédéterminé, laquelle vérification se déroule au moyen d'un dispositif de vérification (9, 19, 29) ; et
F) déplacement du fluide (1, 11, 21) depuis le récipient d'alimentation (2, 12, 22) par le biais de l'au moins un composant de couplage (4, 14, 24) jusqu'au réservoir tampon (3, 13, 23) si la vérification selon l'étape E) est fructueuse ;
**caractérisé en ce que** l'au moins un composant de couplage (4, 14, 24) est de nature partagée, ledit composant de couplage étant configuré pour être couplé directement ou indirectement à une pluralité de réservoirs tampons et une pluralité de récipients d'alimentation, et **en ce que** les informations historiques comprennent au moins des informations relatives à un fluide (1, 11, 21) guidé en dernier à travers l'au moins un composant de couplage identifié (4, 14, 24).

2. Procédé selon la revendication 1, dans lequel l'identification du fluide (1, 11, 21) présent dans le récipient d'alimentation (2, 12, 22) selon l'étape A) se déroule par lecture d'une étiquette (5, 15, 25) associée au récipient d'alimentation (2, 12, 22), laquelle étiquette (5, 15, 25) comprend des informations relatives au fluide (1, 11, 21), et/ou l'identification de l'au moins un composant de couplage (4, 14, 24) selon l'étape C) se déroule par lecture d'une étiquette (8, 18, 28) associée à l'au moins un composant de couplage (4, 14, 24), laquelle étiquette (8, 18, 28) comprend des informations relatives à l'au moins un composant de couplage (4, 14, 24).

3. Procédé selon la revendication 2 dans lequel, pendant ou après la lecture de respectivement l'étiquette de récipient d'alimentation (5, 15, 25) et/ou l'étiquette de composant de couplage (8, 18, 28), l'identité du fluide (1, 11, 21) est déterminée par récupération de données qui identifient le fluide (1, 11, 21) à partir de la base de données (7, 17, 27) sur la base des informations lues et/ou l'identité de l'au moins un composant de couplage (4, 14, 24) est déterminée par récupération de données qui identifient l'au moins un composant de couplage (4, 14, 24) à partir de la base de données (7, 17, 27) sur la base des informations lues.

4. Procédé selon l'une quelconque des revendications précédentes, dans lequel une pluralité de composants de couplage (4, 14, 24) branchés en série sont appliqués pendant l'étape B) afin de coupler le récipient d'alimentation (2, 12, 22) et le réservoir tampon (3, 13, 23).

5. Procédé selon la revendication 4, dans lequel tous les composants de couplage appliqués (4, 14, 24) sont identifiés pendant l'étape C) et une vérification est ensuite réalisée pendant l'étape D) et l'étape E) pour tous les composants de couplage identifiés (4, 14, 24), sur la base d'informations historiques stockées dans la base de données (7, 17, 27), pour savoir si le fluide identifié (1, 11, 21) peut s'écouler à travers les composants de couplage (4, 14, 24), l'étape F) se déroulant uniquement si l'étape de vérification pour chaque composant de couplage identifié (4, 14, 24) est fructueuse.

6. Procédé selon l'une quelconque des revendications précédentes, dans lequel est stockée, dans la base de données (7, 17, 27) consultée pendant l'étape D), au moins un double renvoi entre l'identification de l'au moins un composant de couplage (4, 14, 24) et l'identification du fluide (1, 11, 21) qui a été guidé le plus récemment à travers le composant de couplage (4, 14, 24).

7. Procédé selon l'une quelconque des revendications précédentes, dans lequel la vérification en fonction de l'au moins un critère prédéterminé est fructueuse pendant l'étape E) quand :
- les constituants actifs du fluide identifié (1, 11, 21) correspondent aux constituants actifs du fluide (1, 11, 21) utilisé en dernier ; ou
- le fluide identifié (1, 11, 21) ne réagit pas avec le fluide (1, 11, 21) utilisé en dernier ; ou
- le fluide identifié (1, 11, 21) réagit avec le fluide (1, 11, 21) utilisé en dernier et forme des produits de réaction, en particulier de l'eau, qui sont jugés acceptables.

8. Procédé selon l'une quelconque des revendications précédentes, dans lequel le fluide (1, 11, 21) qui doit être reçu dans le réservoir tampon (3, 13, 23) est identifié pendant l'étape A).

9. Procédé selon la revendication 8 dans lequel, pendant la vérification selon l'étape E), une vérification supplémentaire est réalisée pour savoir si le fluide (1, 11, 21) issu du récipient d'alimentation (2, 12, 22) correspond au fluide (1, 11, 21) souhaité dans le réservoir tampon (3, 13, 23), l'étape F) se déroulant uniquement si ladite étape de vérification supplémentaire est fructueuse.

10. Procédé selon l'une quelconque des revendications précédentes, le procédé comprenant également, si la vérification selon l'étape E) est infructueuse, l'étape G) comprenant le nettoyage de l'au moins un composant de couplage (4, 14, 24) au moyen d'un liquide de rinçage (X).

11. Procédé selon la revendication 10, le procédé comprenant également l'étape H) comprenant, pendant ou après la réalisation de l'étape G), le stockage, dans la base de données (7, 17, 27) également utilisée pendant l'étape D), d'au moins un double renvoi entre l'identification de l'au moins un composant de couplage (4, 14, 24) et l'identification du liquide de rinçage (X) comme le fluide (1, 11, 21) qui a été guidé le plus récemment à travers le composant de couplage (4, 14, 24).

12. Procédé selon l'une quelconque des revendications précédentes, le procédé comprenant également l'étape I) comprenant le découplage de l'au moins un composant de couplage (4, 14, 24) à la fois du récipient d'alimentation (2, 12, 22) et du réservoir tampon (3, 13, 23) après l'étape F).

13. Procédé selon la revendication 12 dans lequel, après l'étape I), les étapes A)-E) et sous condition l'étape F) sont de nouveau réalisées dans le but de déplacer un deuxième fluide (1, 11, 21) différent du premier fluide (1, 11, 21) depuis un deuxième récipient d'alimentation (2, 12, 22) jusqu'à un deuxième réservoir tampon (3, 13, 23).

14. Procédé selon la revendication 13 dans lequel, après le découplage de l'au moins un composant de couplage (4, 14, 24) selon l'étape I), l'au moins un composant de couplage découplé (4, 14, 24) est nettoyé au moyen d'un fluide de rinçage (X) pendant une étape ultérieure J), et dans lequel, pendant ou après la réalisation de l'étape J), est réalisée l'étape K) comprenant le stockage, dans la base de données (7, 17, 27) également utilisée pendant l'étape D), d'au moins un double renvoi entre l'identification de l'au moins un composant de couplage (4, 14, 24) et l'identification du liquide de rinçage (X) comme le fluide (1, 11, 21) qui a été guidé le plus récemment à travers le composant de couplage (4, 14, 24).

15. Système destiné à déplacer un fluide (1, 11, 21) depuis un récipient d'alimentation (2, 12, 22) jusqu'à un réservoir tampon (3, 13, 23), en particulier en appliquant le procédé selon l'une quelconque des revendications précédentes, et plus particulièrement pour une utilisation dans une blanchisserie industrielle, comprenant :
- au moins un récipient d'alimentation (2, 12, 22) configuré pour contenir le fluide (1, 11, 21), lequel au moins un récipient d'alimentation (2, 12, 22) est pourvu d'au moins une étiquette (5, 15, 25), cette étiquette (5, 15, 25) étant pourvue d'informations identifiant le fluide (1, 11, 21) qui peut être reçu dans l'au moins un récipient d'alimentation (2, 12, 22) ;
- au moins un réservoir tampon (3, 13, 23) configuré pour contenir le fluide (1, 11, 21) ;
- au moins un composant de couplage (4, 14, 24) pour coupler mutuellement l'au moins un récipient d'alimentation (2, 12, 22) et l'au moins un réservoir tampon (3, 13, 23) dans le but de déplacer le fluide (1, 11, 21) par le biais de l'au moins un composant de couplage (4, 14, 24) depuis l'au moins un récipient d'alimentation (2, 12, 22) jusqu'à l'au moins un réservoir tampon couplé (3, 13, 23), lequel au moins un composant de couplage (4, 14, 24) est pourvu d'au moins une étiquette (8, 18, 28), cette étiquette (8, 18, 28) étant pourvue d'informations identifiant l'au moins un composant de couplage (4, 14, 24) ;
- au moins une base de données (7, 17, 27) comprenant au moins des informations historiques relatives à l'au moins un composant de couplage (4, 14, 24) ;
- au moins un dispositif de lecture (6, 16, 26) configuré pour lire l'au moins une étiquette de récipient d'alimentation (5, 15, 25) et l'au moins une étiquette de composant de couplage (8, 18, 28) ; et
- au moins un dispositif de vérification (9, 19, 29) connecté à la base de données (7, 17, 27) et au dispositif de lecture (6, 16, 26) dans le but de vérifier, sur la base du composant de couplage identifié (4, 14, 24), si le fluide (1, 11, 21) provenant de l'au moins un récipient d'alimentation (2, 12, 22) peut s'écouler à travers le composant de couplage identifié (4, 14, 24),
**caractérisé en ce que** l'au moins un composant de couplage (4, 14, 24) est de nature partagée, ledit composant de couplage étant configuré pour être couplé directement ou indirectement à une pluralité de réservoirs tampons et une pluralité de récipients d'alimentation, et **en ce que** les informations historiques comprennent au moins des informations relatives à un fluide (1, 11, 21) guidé en dernier à travers l'au moins un composant de couplage identifié (4, 14, 24).

16. Système selon revendication 15, dans lequel au moins un composant de couplage est formé par une conduite ou une pompe.

17. Système selon revendication 15 ou 16, dans lequel le récipient d'alimentation (2, 12, 22) est couplé par le biais d'une pluralité de composants de couplage branchés en série (4, 14, 24) à un réservoir tampon (3, 13, 23).

18. Système selon l'une quelconque des revendications 15 à 17, dans lequel au moins un réservoir tampon (3, 13, 23) est branché à un dispositif de lavage de textile pour une application dans une blanchisserie industrielle.

19. - Système selon l'une quelconque des revendications 15 à 18, le système comprenant au moins un dispositif de rinçage pour rincer des composants de couplage (4, 14, 24) avec un liquide de nettoyage (X).
